# FASCICULE DE BREVET EUROPEEN

(11) **EP 1 848 366 B1**
(45) Date de publication et mention de la délivrance du brevet: **15.04.2009**
(21) Numéro de dépôt: 06707948.3
(22) Date de dépôt: 01.02.2006
(51) Int. Cl.: A61C 13/00, A61C 8/00, A61C 1/08

(54) **PROCEDE DE FABRICATION D'UNE PROTHESE DENTAIRE ET APPAREILLAGE MIS EN OEUVRE**
VERFAHREN ZUR HERSTELLUNG EINER ZAHNPROTHESE UND VORRICHTUNG ZUR DURCHFÜHRUNG DES VERFAHRENS
METHOD FOR PRODUCING A DENTAL PROSTHESIS AND A DEVICE FOR CARRYING OUT SAID METHOD

(30) Priorité: 03.02.2005 BE 200500061
(43) Date de publication de la demande: 31.10.2007
(73) Titulaire: 2INGIS S.A., 1120 Bruxelles (BE)
(72) Inventeur: De Moyer, Philippe Albert Paul Ghistain, 1650 Beersel (BE)
(74) Mandataire: Pecher, Nicolas
(86) Numéro de dépôt international: PCT/EP2006/050584
(87) Numéro de publication internationale: WO 2006/082198

(56) Documents cités:
- EP-A- 1 532 939
- WO-A-03/073954
- WO-A-20/04017860
- WO-A-20/04075771
- FR-A- 2 808 669
- US-A- 5 967 777
- US-B1- 6 514 258

## Description

La présente invention est relative à un procédé de fabrication d'une prothèse dentaire à implanter dans une mâchoire d'un patient et à un appareillage mis en oeuvre pour une telle implantation.

Un tel procédé est divulgué dans le document WO 2004/075771.

Les implants sont posés pour l'heure de quatre façons:
1. En main libre avec une large découpe de la gencive et un décollement de cette dernière. La pose se fait d'une manière archaïque sans aucune référence et aucun repère par rapport à la future prothèse. Bien que cette technique soit la plus mauvaise et donne des résultats souvent esthétiquement, fonctionnellement et hygiéniquement désastreux, elle est la plus utilisée. C'est également celle qui provoque le plus d'accidents (rupture du nerf mandibulaire, perçage du sinus, rupture des corticales, ...).
2. En main libre avec une large découpe de la gencive et un décollement de cette dernière, la pose se fait d'une manière plus ou moins précise car le laboratoire dentaire a réalisé un guide chirurgical qui préfigure plus ou moins la future prothèse. Cette technique est la deuxième la plus utilisée, mais l'inconvénient est que le guide chirurgical est souvent inutilisable vu la découpe de la gencive qui empêche la mise en place de ce dernier. Avec cette technique les résultats sont souvent mauvais au niveau esthétique, fonctionnel, hygiénique et les accidents tels que précités sont nombreux.
3. En main guidée par des guides de forage réalisés à partir d'une planification informatisée. Cette technique permet de placer des cylindres de forage dans ces guides à des endroits précis en fonction de l'os ou en fonction de l'os et de la future prothèse. Deux technologies distinctes appliquent cette technique :
   - Des guides sont réalisés à partir de modèles stéréolitographiques, c'est-à-dire sur base d'images issues d'un balayage dentaire. Les artéfacts perturbent souvent la réalisation de ces guides en ne permettant pas toujours de les utiliser par manque de précision.
   - Des guides sont réalisés à partir d'une empreinte et d'un guide radiologique qui est réalisé sur base de cette empreinte en silicone (et non sur base d'une image issue d'un balayage dentaire). Ce guide radiologique est ensuite transformé en guide chirurgical par l'insertion de cylindres de guidage pour le forage et la pose d'implants dans la mâchoire.
   Ces techniques permettent de réduire les dommages au patient et en particulier la dernière technique améliore le résultat prothétique.
4. En main libre guidée par un système de navigation (GPS). Cette technique permet de placer avec plus ou moins de précision un implant. Mais elle ne permet pas de prévenir tout dommage au patient car le forage reste manuel et un dérapage reste possible. De plus elle ne tient pas compte de la future prothèse. Cette technique est chère et est la moins utilisée.

Toutes ces techniques présentent ensemble l'inconvénient de devoir réaliser la prothèse définitive après une prise d'empreinte de la mâchoire où les implants ont été placés préalablement, laquelle est réalisée plusieurs semaines après la pose des implants, ce qui est complexe et demande de nombreuses interventions post-opératoires, lourdes pour le patient.

La présente invention a pour but de mettre au point un procédé de fabrication de prothèse dentaire à implanter dans une mâchoire d'un patient qui surmonte les inconvénients précités et qui permette de simplifier la pose de ces prothèses, tout en obtenant une précision et une fiabilité accrues.

Pour résoudre ces problèmes on a prévu suivant l'invention un procédé de fabrication d'une prothèse dentaire à implanter dans une mâchoire d'un patient, comprenant
- une réalisation à partir d'une empreinte de la mâchoire du patient d'un guide radiologique, doté d'au moins une dent artificielle radiologique et de repères radiologiques,
- un traitement par ordinateur d'une image radiologique en deux dimensions représentant le guide radiologique susdit en position sur la mâchoire, de façon à constituer, à partir de cette image en deux dimensions, une image en trois dimensions,
- dans les images en deux et trois dimensions, une insertion, par dent, d'un implant virtuel en position chirurgicalement appropriée dans l'image de la mâchoire et d'un cylindre de guidage virtuel orienté coaxialement à l'implant virtuel dans l'image du guide radiologique,
- une réalisation, à partir des données récoltées et calculées par l'ordinateur pendant lesdites étapes de traitement d'image et d'insertion d'implant virtuel et de cylindre de guidage virtuel, d'un guide chirurgical par un premier forage, dans chaque dent artificielle supportée par le guide radiologique, d'un premier trou approprié pour recevoir un cylindre de guidage disposé et orienté comme le cylindre de guidage virtuel correspondant des images en deux et trois dimensions, et par placement dans chaque premier trou foré d'un tel cylindre de guidage muni d'au moins un repère extérieur,
- un placement du guide chirurgical sur un modèle obtenu à partir de ladite empreinte,
- un deuxième forage, guidé à travers chaque cylindre de guidage, d'un deuxième trou à travers ce modèle,
- un placement, dans chaque deuxième trou, d'un analogue d'implant par coulissement dans le cylindre de guidage d'un porte-analogue, qui porte l'analogue d'implant susdit, jusqu'à une profondeur correspondant à celle de l'implant virtuel sur les images en deux et trois dimensions et par mise en correspondance, par rotation, d'au moins un deuxième repère extérieur prévu sur le porte-analogue avec ledit premier repère extérieur du cylindre de guidage,
- ledit analogue d'implant présentant des dimensions correspondant à celles de l'implant virtuel sélectionné pour l'insertion dans les images en deux et trois dimensions lequel correspond à un implant réel à placer dans la mâchoire du patient, et ledit porte-analogue d'implant étant identique à un porte-implant sélectionné pour l'implantation dudit implant réel à placer,
- une fixation de l'analogue d'implant dans son trou, tel que placé,
- après enlèvement de chaque porte-analogue et du guide chirurgical, une confection d'une prothèse dentaire définitive adaptée au modèle pourvu du ou des analogues d'implant, cette prothèse pouvant ainsi être fixée sur les implants sélectionnés après leur implantation dans la mâchoire d'une manière guidée par le guide chirurgical et identique à celle utilisée pour le placement des analogues d'implant dans le modèle.

Ce procédé offre le grand avantage de déterminer par image la position de chacun des implants à implanter dans une position idéale dans la mâchoire, en fonction de la situation des nerfs mandibulaires, des sinus, etc. Par le guidage approprié de l'invention, on peut de manière reproductible introduire dans un modèle et par la suite de la même manière dans la mâchoire un analogue d'implant et respectivement un implant semblable. Cette introduction est toujours effectuée de façon que l'implant et l'analogue d'implant soient fixés dans leur support (modèle ou mâchoire) avec la position déterminée sur les images en deux et trois dimensions, c'est-à-dire avec la même orientation axiale et à la même profondeur. De plus, par un repérage approprié, il est possible, suivant l'invention, que la tête de l'implant et celle de l'analogue d'implant, qui ont généralement une forme de prisme à section triangulaire ou polygonale et sur lesquelles est placée ensuite la prothèse, se trouvent en rotation dans une position précise qui sera la même dans les deux cas. Cela offre l'avantage exceptionnel de pouvoir réaliser la prothèse définitive unitaire ou multiple sur modèle, avant même la pose des implants, et de mettre en place cette prothèse sur les implants, le jour de la pose de ceux-ci.

Suivant une forme particulière de l'invention, le procédé comprend en outre
- un façonnage à partir de ladite empreinte d'au moins un modèle, sur lequel on réalise un montage muni de fausses dents adaptables en bouche,
- une réalisation d'une clef du montage,
- après enlèvement desdites fausses dents, un coulage, dans la clef montée sur le modèle, d'une matière visible en imagerie radiologique, et un durcissement de celle-ci sous la forme d'un arc,
- une division de l'arc durci en dents artificielles radiologiques individuelles qui, replacées dans la clef, sont fixées sur le modèle, et
- après enlèvement de la clef, ladite réalisation dudit guide radiologique par dépôt d'une résine autodurcissante sur les dents artificielles radiologiques fixées au modèle.

Ce procédé permet de réaliser une image d'un guide radiologique muni de dents artificielles individuelles, très proches de ce qui va être nécessaire pour la prothèse. Avantageusement ces dents artificielles sont constituées d'une matière visible en imagerie radiologique qui, de préférence, est un mélange de résine courante pour le façonnage de dents artificielles et de sulfate de baryum. Celui-ci est introduit dans le mélange par exemple en une proportion de l'ordre de 30 % en volume.

D'autres particularités du procédé suivant l'invention sont indiquées dans les revendications annexées.

La présente invention a également pour but de présenter un appareillage destiné à une implantation dentaire dans une mâchoire d'un patient, en particulier un appareillage qui soit capable de mettre en oeuvre le procédé indiqué ci-dessus.

Dans ce but on a prévu, suivant l'invention, un appareillage destiné à une implantation de prothèse dentaire dans une mâchoire d'un patient, comprenant
- au moins un modèle réalisé à partir d'une empreinte de la mâchoire du patient,
- un guide radiologique, également réalisé à partir de cette empreinte, et doté d'au moins une dent artificielle radiologique et de repères radiologiques,
- un ordinateur,
- un programme de traitement d'image permettant de piloter l'ordinateur de façon à constituer, à partir d'une image radiologique en deux dimensions du guide radiologique susdit en position sur la mâchoire du patient, une image en trois dimensions et à insérer dans ces images en deux et trois dimensions, par dent, un implant virtuel sélectionné en position chirurgicalement appropriée dans l'image de la mâchoire et un cylindre de guidage virtuel sélectionné orienté coaxialement à l'implant virtuel dans l'image du guide radiologique,
- un outil de positionnement et de forage, dans lequel le guide radiologique est positionné à l'aide de ses repères radiologiques, cet outil étant capable, sur base des données récoltées et calculées par l'ordinateur relativement aux images en deux et trois dimensions, de forer dans chacune des dents du guide radiologique un premier trou pour recevoir un cylindre de guidage disposé et orienté comme le cylindre de guidage virtuel sur les images en deux et trois dimensions,
- un cylindre de guidage à loger dans chacun des premiers trous forés du guide radiologique qui devient ainsi un guide chirurgical, chaque cylindre de guidage étant muni d'au moins un premier repère extérieur,
- au moins un premier foret, qui, lorsque le guide chirurgical est en position sur le modèle, est guidable au travers de chaque cylindre de guidage et est capable de forer là, dans le modèle, un deuxième trou suivant l'orientation du cylindre de guidage correspondant,
- un analogue d'implant correspondant à chaque implant virtuel sélectionné à loger dans chaque deuxième trou foré du modèle, à l'aide d'un porte-analogue à coulisser axialement au travers du cylindre de guidage correspondant, chaque porte-analogue comportant des moyens d'arrêt, qui arrêtent le coulissement du porte-analogue par rapport au cylindre de guidage lorsque l'analogue est dans une position correspondant à la position chirurgicalement appropriée des images en deux et trois dimensions, et au moins un deuxième repère extérieur à mettre en correspondance, par rotation, avec ledit au moins un premier repère extérieur du cylindre de guidage,
- une prothèse dentaire adaptable sur le modèle muni du ou des analogues d'implant susdits,
- au moins un deuxième foret qui, lorsque le guide chirurgical est position sur la mâchoire du patient, est guidable au travers de chaque cylindre de guidage et est capable de forer là des troisièmes trous dans la mâchoire suivant l'orientation du cylindre de guidage, ledit au moins un deuxième foret comportant des moyens d'arrêt qui, contre le cylindre de guidage, arrêtent une pénétration du foret à une profondeur qui correspond à celle de ladite position chirurgicalement appropriée de l'implant virtuel sur les images en deux et trois dimensions, et
- un implant correspondant à chaque implant virtuel sélectionné à loger dans chaque troisième trou de la mâchoire à l'aide d'un porte-implant à coulisser axialement au travers du cylindre de guidage correspondant, chaque implant et son porte-implant ayant des dimensions et formes identiques à l'analogue d'implant et à son porte-analogue utilisés dans le modèle, chaque porte-implant comportant ainsi des moyens d'arrêt, qui arrêtent le coulissement du porte-implant dans le cylindre de guidage lorsque l'implant est dans la position chirurgicalement appropriée susdite, et au moins un troisième repère extérieur à mettre en correspondance, par rotation, avec ledit au moins un premier repère extérieur du cylindre de guidage, les implants ainsi fixés dans la mâchoire étant en position pour recevoir la prothèse dentaire préalablement réalisée sur le modèle.

Par prothèse dentaire, on entend suivant l'invention tout appareil destiné à être placé sur un implant dentaire, et notamment une couronne, une pièce d'aboutement, une barre, un bridge, etc.

Suivant une forme perfectionnée de réalisation de l'invention chaque cylindre de guidage, d'une part, et chaque porte-analogue ou chaque porte-implant à coulisser à l'intérieur de ce cylindre de guidage, d'autre part, présentent des moyens de butée réciproques qui arrêtent un mouvement de rotation du porte-analogue ou porte-implant par rapport au cylindre de guidage dans une position prédéterminée, ces moyens de butée servant de premier et deuxième ou respectivement troisième repères extérieurs susdits. Avantageusement, chaque cylindre de guidage présente une cavité axiale ayant un diamètre interne, chaque porte-analogue ou porte-implant ou chaque deuxième foret comportant une partie cylindrique présentant un diamètre externe permettant un coulissement guidé de cette partie dans la cavité du cylindre de guidage et une bride présentant un diamètre supérieur audit diamètre interne, qui sert de moyen d'arrêt susdit.

D'autres détails et particularités de l'invention ressortiront de la description donnée ci-après, à titre d'exemple non limitatif et avec référence aux dessins annexés, d'un procédé de production de prothèse dentaire suivant l'invention.

Les figures 1 à 8 représentent dans une vue en coupe les étapes de fabrication d'un guide chirurgical suivant l'invention.

Les figures 9 à 11 représentent dans la même vue en coupe les étapes d'implantation d'analogues d'implant dans le modèle et de réalisation de la prothèse définitive sur les analogues d'implants.

La figure 12 représente une vue en élévation latérale d'un cylindre de guidage suivant l'invention.

La figure 13 représente une vue en élévation latérale d'un porte-analogue suivant l'invention.

La figure 14 représente une vis de fixation de l'analogue d'implant à son porte-analogue.

La figure 15 représente une vue partiellement en coupe de l'assemblage de l'analogue d'implant et de son porte-analogue.

La figure 16 représente un foret à utiliser dans un modèle.

Sur les différents dessins, les éléments identiques ou analogues portent les mêmes références.

### Réalisation d'un guide radiologique

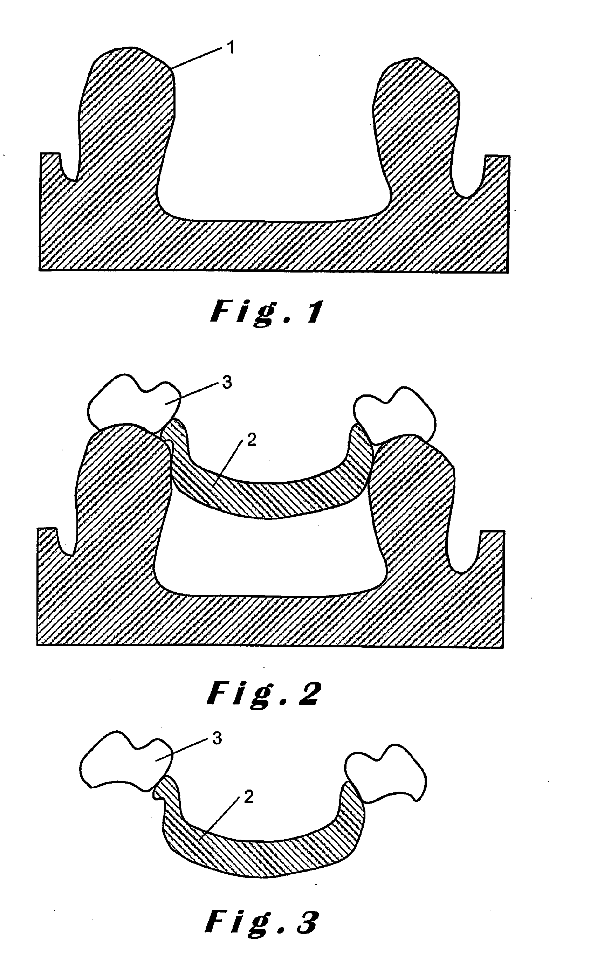

On réalise tout d'abord une empreinte précise et non compressive de la mâchoire du patient en silicone à viscosité moyenne ou faible, afin d'obtenir un moule tridimensionnel de la gencive et des dents. On procède de même pour obtenir une empreinte de l'antagoniste de la mâchoire à traiter et ainsi un moule de cet antagoniste. A partir de ces empreintes on coule des modèles en plâtre dur, de préférence 3 fois pour le modèle 1 de la mâchoire à traiter (voir figure 1) et une fois pour la mâchoire antagoniste.

Ainsi qu'il ressort de la figure 2, on réalise alors sur le modèle 1 un montage ("wax-up") précis à l'aide d'une base de montage 2 en cire ou en résine et de fausses dents 3 sélectionnées, que l'on peut trouver sur le marché, par exemple sous la marque commerciale de Physiodens. Ce montage doit préfigurer avec précision le résultat prothétique et il doit donc être essayé en bouche par le patient et éventuellement adapté (voir figure 3).

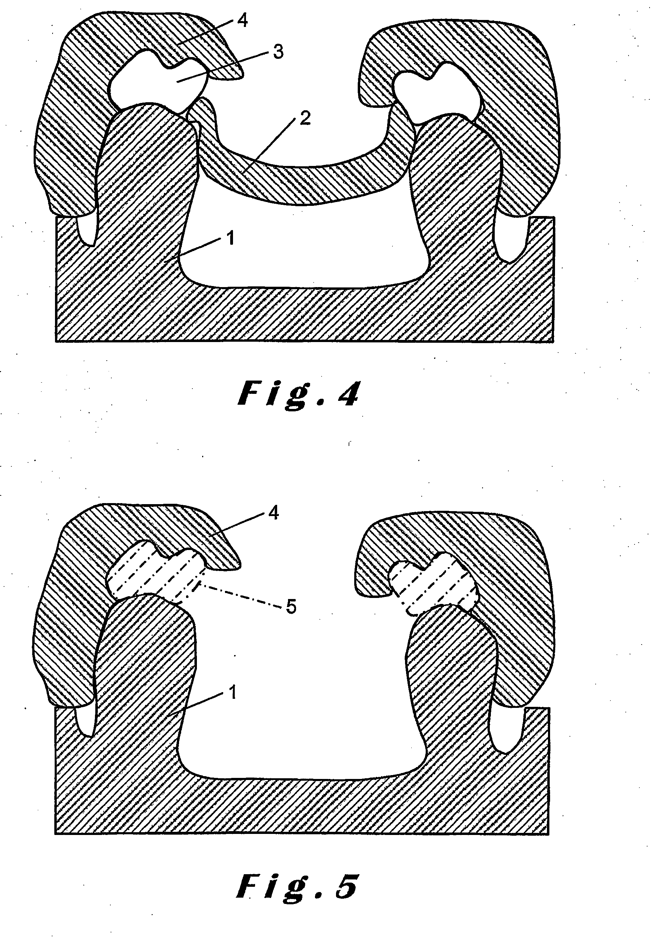

Après l'essai on réalise sur le montage 2 replacé sur le modèle 1, une clef 4, par exemple en silicone, (voir figure 4) et on ôte ensuite de la clef le montage et donc les fausses dents 3. Comme représenté sur la figure 5, on coule dans l'espace laissé vide entre la clef 4 et le modèle 1 un mélange d'une matière usuelle pour le façonnage de dents artificielles, par exemple une résine synthétique, et de sulfate de baryum à 30 % en volume environ, qui est une matière visible en imagerie radiologique. Après durcissement on obtient un arc correspondant 5 (voir figure 5).

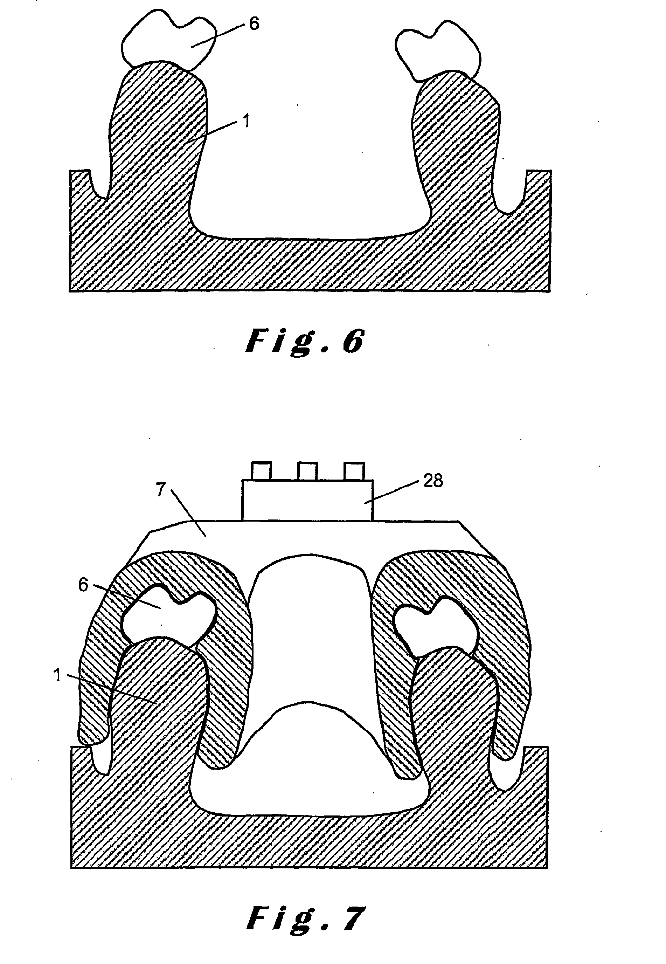

Après avoir ôté la clef 4 du modèle 1, on en retire l'arc durci 5 et on divise celui-ci en dents individuelles 6 qui sont retravaillées afin d'obtenir la forme la plus naturelle possible. On replace ensuite les dents individuelles 6 dans la clef 4, en veillant à ce qu'un espace d'environ 0,5 mm persiste, sans points de contact entre dents. On replace la clef 4 munie des dents sur le modèle 1 et on y coule une résine autopolymérisante du côté palatin ou lingual selon les cas. Après durcissement de la résine, on peut retirer la clef 4, les dents artificielles 6 étant fixées sur le modèle 1, comme représenté sur la figure 6.

On peut alors déposer par exemple de la résine autopolymérisante sur et autour des dents 6 de manière à former un guide appelé guide radiologique 7 (voir figure 7).

On termine ce guide radiologique en le démoulant du modèle 1, en éliminant les contre-dépouilles à l'intrados du guide, et en appliquant dessus des repères radiologiques qui permettent un positionnement spatial du guide radiologique à l'intérieur de l'appareil d'imagerie et en repérage sur l'image obtenue. Un tel repère peut par exemple être constitué d'un bloc lego 28 (voir figure 7) et/ou des pointes de gutta insérées dans le guide en des endroits appropriés.

Le guide radiologique peut alors être essayé à nouveau dans la bouche du patient.

### Formation d'une image en trois dimensions

Une image en deux dimensions du guide radiologique en position sur la mâchoire du patient est prise dans un appareil approprié, par exemple par balayage dans un scanner. D'une manière usuelle, les données issues du scanner peuvent par exemple être enregistrées sur un disque, par exemple un CD, en mode DICOM.

Dans un ordinateur, ces données sont traitées pour transformer l'image en deux dimensions en une image en trois dimensions. Pour cela l'ordinateur est piloté par un programme approprié, disponible sur le marché, par exemple le programme MED3D distribué par Distridenta Sprl. Dans ces images en deux et trois dimensions apparaissent bien entendu une mâchoire, son nerf mandibulaire s'il s'agit de la mâchoire inférieure ou un sinus s'il s'agit de la mâchoire supérieure. On remarque également sur ces images le guide radiologique sous une forme peu contrastée ainsi que les repères radiologiques. Les dents artificielles, grâce à leur composition spéciale, se détachent de manière très nette et précise par une couleur blanc brillant, par rapport au reste de l'image de couleur plus terne.

Le programme permet de sélectionner, pour chaque dent à implanter, un implant de type et de dimensions (longueur, diamètre) appropriés parmi les implants disponibles sur le marché et enregistrés dans les données de l'ordinateur. On peut alors introduire cet implant, sous la forme d'une image virtuelle dans les images en deux et trois dimensions de la mâchoire dans une position chirurgicalement appropriée. Les implants sont en effet placés de manière virtuelle en fonction notamment de la position des dents voisines séparées, de l'occlusion, du nerf, du sinus, de l'os. On vérifie aussi que la quantité d'os soit suffisante pour obtenir une ostéointégration (1,5 mm) autour de l'implant.

Le programme permet aussi de placer de manière virtuelle, dans les images du guide radiologique, des cylindres de guidage d'une hauteur et d'un diamètre appropriés pour le cas précis, ces paramètres étant à déterminer en fonction du sommet de l'implant. Les cylindres de guidage virtuels sont placés coaxialement aux implants virtuels.

L'ordinateur enregistre les coordonnées de réglage des implants virtuels et des cylindres de guidage virtuels dans les images en deux et trois dimensions sous une forme transmissible électroniquement.

### Réalisation d'un guide chirurgical

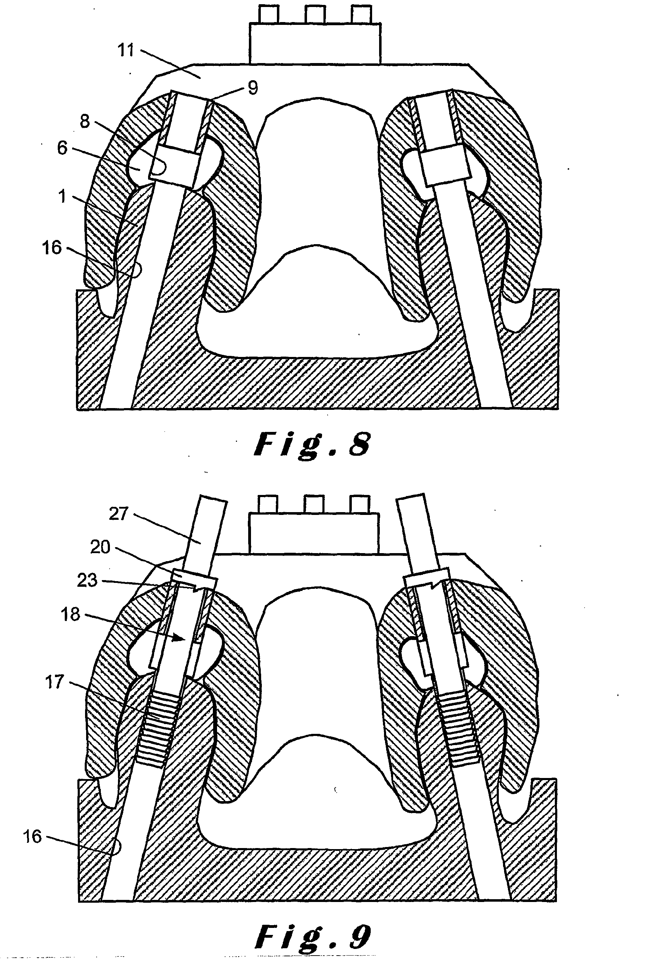

Les données précitées des images en deux et trois dimensions sont transmises à un outil de positionnement et de forage approprié, capable de traduire et utiliser ces données. On peut faire usage par exemple d'un appareil disponible sur le marché sous la dénomination commerciale de MED3D, distribué par Distridenta Sprl. On place alors le guide radiologique 7, par exemple avec du plâtre, dans l'outil de positionnement en fonction des calculs de l'ordinateur. Après cette mise en place dans une position unique correcte correspondant à chaque patient, l'outil de positionnement est capable de forer des trous 8 dans chacune des dents artificielles 6 du guide radiologique 7 (voir figure 8), chaque trou étant disposé et orienté comme le cylindre de guidage virtuel sur les images en deux et trois dimensions. On peut ensuite placer un cylindre de guidage 9 dans chaque trou, par exemple par l'intermédiaire d'un porte-cylindre agencé sur l'outil de positionnement.

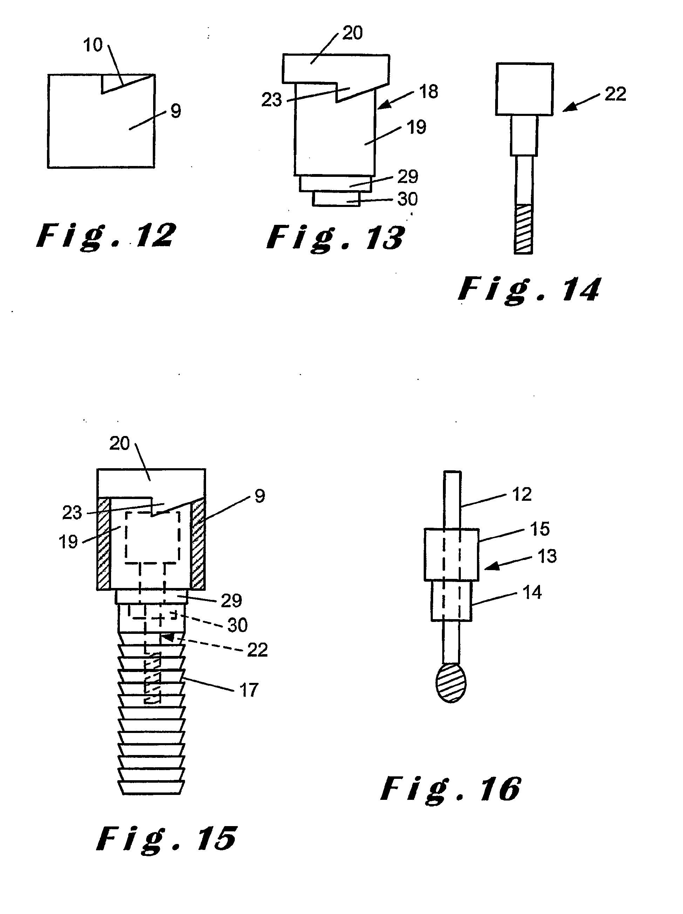

Une forme de réalisation de cylindre de guidage de ce type est représentée sur la figure 12. Ce cylindre de guidage est muni d'un repère extérieur sous la forme d'une encoche 10 dans son bord supérieur. Cette encoche présente une face en pente, qui présente de préférence une inclinaison dans la direction des spires du futur implant et une face d'arrêt parallèle à l'axe du cylindre. Les cylindres sont placés de façon que ce repère soit visible de l'extérieur de la bouche lorsque le guide chirurgical sera en place dans celle du patient. Il doit être entendu que d'autres types de repère peuvent être imaginés, et par exemple un ou plusieurs marquages sur le bord supérieur du cylindre. Après placement, les cylindres 9 sont fixés dans leur trou 8, par exemple par photopolymérisation d'une matière composite appropriée. Le guide chirurgical est à présent prêt à l'emploi et reçoit la référence 11.

### Réalisation de la prothèse définitive sur modèle

On place ce guide chirurgical 11 sur un modèle 1. On fore alors des trous 16 à travers le modèle, en étant guidé par les cylindres 9 du guide chirurgical (voir figure 8). On peut évidemment, pour éviter d'abîmer les cylindres 9 destinés à guider le futur forage chirurgical en bouche, protéger ceux-ci par un cylindre de protection non représenté et inséré à l'intérieur des cylindres de guidage 9. On peut effectuer ce forage manuellement ou par l'intermédiaire de l'outil de positionnement et de forage. Un type de foret utilisable est illustré, non à l'échelle, sur la figure 16 à titre d'exemple. La tige de ce foret 12 est passée au travers d'un guide de forage 13 dans lequel elle peut coulisser et qui comprend une partie inférieure 14 capable de glisser à l'intérieur du cylindre de guidage 9 et une partie supérieure 15 présentant un diamètre supérieur au cylindre de guidage 9.

Un analogue d'implant 17 présentant le type et les dimensions de l'implant sélectionné lors de la réalisation des images en deux et trois dimensions est alors fixé sur un porte-analogue. Par analogue d'implant il faut entendre que celui-ci présente les dimensions critiques de l'implant, à savoir sa hauteur et son diamètre dans la partie supérieure. L'analogue d'implant n'a pas besoin d'être pourvu d'un filetage externe, ni d'avoir une forme pointue comme la plupart des implants. Dans l'exemple représenté, il a une forme cylindrique pourvue en surface d'un rainurage de retenue. Il doit par contre présenter une tête en saillie à section triangulaire, carrée ou polygonale identique à celle du futur implant.

Un exemple de porte-analogue 18 est représenté isolément sur la figure 13. Il comporte un corps cylindrique 19 capable de coulisser dans le cylindre de guidage 9 ainsi qu'il est illustré sur la figure 15. Il comporte aussi des moyens d'arrêt de ce coulissement sous la forme par exemple d'une bride annulaire 20 d'un diamètre externe supérieur au diamètre interne du cylindre de guidage 9. A son extrémité opposée à la bride 20, le corps 19 porte une rondelle 29 présentant un diamètre inférieur à celui du corps, mais supérieur ou égal à celui de l'analogue d'implant, et une saillie cylindrique 30 qui peut être pincée dans une cavité sommitale de l'analogue d'implant 17. L'épaisseur de la rondelle 29 sera choisie en fonction de la distance appropriée à prévoir entre le cylindre de guidage et l'analogue d'implant en position. Une vis de fixation 22, illustrée à titre d'exemple sur la figure 14, peut être logée à l'intérieur du porte-analogue 18 pour retenir l'analogue d'implant pendant l'introduction de celui-ci dans le trou 16. Comme on peut le voir sur le porte-analogue 18 représenté de manière schématique sur la figure 9, celui-ci peut être muni d'un manche 27.

La bride du porte-analogue 18 porte aussi au moins un repère extérieur, sous la forme par exemple d'une saillie 23 vers le bas de forme correspondant à celle de l'encoche 10 du bord supérieur du cylindre de guidage 9. Pour pouvoir enfoncer totalement le porte-analogue 18 dans le cylindre de guidage, il faut donc tourner le porte-analogue 18 autour de son axe jusqu'à ce que la saillie 23 soit bloquée dans l'encoche 10. Donc, lors de l'introduction du porte-analogue, le coulissement axial de celui-ci est arrêté par contact entre sa bride 20 et le bord supérieur du cylindre de guidage 9, et la position en rotation de l'analogue d'implant est réglée par la butée de la saillie 23 sur la face de l'encoche 10 qui est parallèle à l'axe du cylindre de guidage. Cela signifie que l'analogue d'implant est alors en position, à la profondeur et dans l'orientation requises selon les images en deux et trois dimensions. La tête précitée 24 de l'analogue d'implant, qui a généralement une section triangulaire à polygonale, a ainsi reçu une positon déterminée en rotation, par rapport à l'encoche 10 du cylindre de guidage.

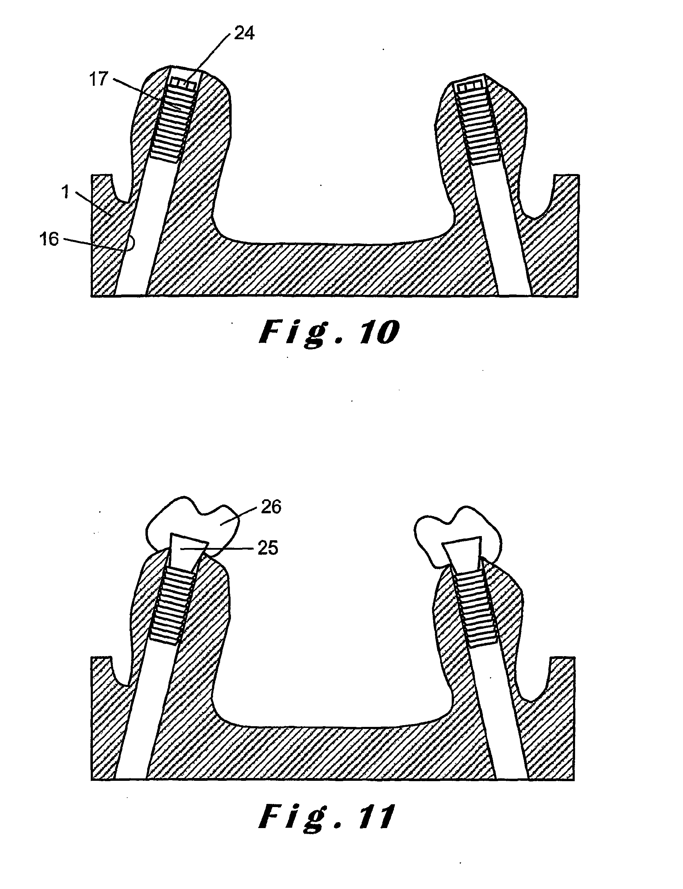

La position de l'analogue d'implant 17 dans le trou 16 est unique et parfaitement déterminée. On le fixe alors dans le trou 16 par exemple par une colle appropriée de type résine polymérisable sans contraction que l'on introduit dans le trou 16 par l'envers du modèle 1. On peut alors enlever le porte-analogue (voir figure 10). Le modèle est prêt pour la réalisation de la prothèse définitive, par exemple des barres, des couronnes, ou des bridges, comme on le réalise actuellement après prise d'empreinte de la mâchoire du patient munie d'implants, empreinte réalisée plusieurs semaines après la pose des implants. Une prothèse en position sur le modèle est illustrée sur la figure 11 où un élément d'aboutement 25 a été fixé sur chaque analogue d'implant avec pardessus la dent artificielle définitive correspondante 26.

### Pose de la prothèse

Ensuite, le guide chirurgical 11 muni de ses cylindres de guidage 9 est placé dans la bouche du patient.

A l'aide de forets chirurgicaux on fore alors, au travers des cylindres de guidage, des trous dans la mâchoire de la même manière que dans le modèle. Toutefois, ces forets, en plus d'être guidés dans une orientation correcte par les cylindres de guidage, sont arrêtés dans leur coulissement par une bride qu'ils portent à une hauteur appropriée correspondant à la profondeur de l'implant sur les images en deux et trois dimensions et qui vient buter contre le cylindre de guidage 9. Il est bien entendu que ce forage peut s'effectuer par paliers, à l'aide de forets différents, et cela d'une manière courante et connue.

Dans chacun de ces trous, on introduit alors un implant semblable à l'analogue d'implant à l'aide d'un porte-implant semblable au porte-analogue, c'est-à-dire pourvu d'un moyen d'arrêt de coulissement, sous la forme par exemple d'une bride, et d'un moyen de repère, par exemple sous la forme d'une saillie vers le bas capable de coopérer avec l'encoche 10 des cylindres de guidage 9. L'implant est ainsi enfoncé à la profondeur requise dans l'orientation appropriée et sa tête de section identique à celle de l'analogue d'implant a en rotation la même position que la tête 24 de l'analogue d'implant sur laquelle la prothèse a été façonnée.

La position des implants dans la bouche est unique et elle correspond parfaitement à celle des analogues d'implant dans le modèle, ainsi qu'à celle apparaissant sur les images radiologiques en deux et trois dimensions. On peut donc y placer immédiatement la prothèse qui a été fabriquée avant la pose des implants.

Un avantage de cette technique est aussi que grâce à l'anticipation prothétique on connaît les positions relatives exactes des implants / prothèse / os et que toutes les sécurités de profondeur, de rotation et de positions latérales sont déterminées et figées. Ainsi toutes erreurs humaines par forage sont exclues.

Grâce à cette précision on obtient la possibilité de créer des implants (par exemple en titane ou en zirconium) en une pièce (implants et moignon) à moignon droit ou angulé dont la forme finale est terminée. L'avantage de ce type d'implants est qu'on ne doit plus les retailler en bouche et de ce fait, il n'y a plus de propagation de chaleur à travers l'implant vers l'os durant une phase de réduction homothétique. Et donc le risque de rejet par brûlure de l'os est éliminé.

Il doit être entendu que la présente invention n'est en aucune façon limitée au mode de réalisation décrit ci-dessus et que bien des modifications peuvent y être apportées sans sortir du cadre du présent brevet.

On peut par exemple prévoir de modeler virtuellement des barres, des éléments d'aboutements, des couronnes ou des bridges à partir des images en deux et trois dimensions et de transmettre ces images et calculs à une machine-outil qui fraise ces réalisations prothétiques dans des blocs métalliques ou matières céramiques. Ces images sont réalisées sur base du contraste de couleur entre le blanc créé à partir des 30 % en volume de sulfate de baryum mélangés à de la résine, qui représentent la prothèse, et une variation de couleur qui représente l'environnement direct. Ces variations sont exprimées en valeur Houndsfield. Grâce à cette délimitation précise du résultat final de la forme des dents, une maille 3D peut être créée immédiatement. L'édition des noeuds de bord et de surface peut être modifiée par l'opérateur informatique grâce aux vues orthographiques dont il dispose. Après obtention de cette forme morphologique sur base de l'image du scanner, on procède à une diminution homothétique du volume de l'élément prothétique afin de disposer d'une certaine place pour poser la résine, le composite ou la céramique. Ces formes sont ensuite reliées aux implants dont on possède les modèles interne et externe ainsi que la forme de la vis de fixation. Après finalisation des modelages virtuels, on transforme et on exporte les données en format CAO correspondant au format requis par la machine-outil qui doit fraiser la base prothétique dans un bloc en métal ou en matière céramique. Après obtention de cette base prothétique, on la fixe sur les analogues du modèle et on applique la résine, le composite ou la céramique d'une manière conventionnelle.

## Revendications

1. Procédé de fabrication d'une prothèse dentaire à implanter dans une mâchoire d'un patient, comprenant
- une réalisation à partir d'une empreinte de la mâchoire du patient d'un guide radiologique, doté d'au moins une dent artificielle radiologique et de repères radiologiques,
- un traitement par ordinateur d'une image radiologique en deux dimensions représentant le guide radiologique susdit en position sur la mâchoire, de façon à constituer, à partir de cette image en deux dimensions, une image en trois dimensions,
- dans les images en deux et trois dimensions, une insertion, par dent, d'un implant virtuel en position chirurgicalement appropriée dans l'image de la mâchoire et d'un cylindre de guidage virtuel orienté coaxialement à l'implant virtuel dans l'image du guide radiologique,
- une réalisation, à partir des données récoltées et calculées par l'ordinateur pendant lesdites étapes de traitement d'image et d'insertion d'implant virtuel et de cylindre de guidage virtuel, d'un guide chirurgical par un premier forage, dans chaque dent artificielle supportée par le guide radiologique, d'un premier trou approprié pour recevoir un cylindre de guidage disposé et orienté comme le cylindre de guidage virtuel correspondant des images en deux et trois dimensions, et par placement dans chaque premier trou foré d'un tel cylindre de guidage muni d'au moins un repère extérieur,
- un placement du guide chirurgical sur un modèle obtenu à partir de ladite empreinte,
- un deuxième forage, guidé à travers chaque cylindre de guidage, d'un deuxième trou à travers ce modèle,
- un placement, dans chaque deuxième trou, d'un analogue d'implant par coulissement dans le cylindre de guidage d'un porte-analogue, qui porte l'analogue d'implant susdit, jusqu'à une profondeur correspondant à celle de l'implant virtuel sur les images en deux et trois dimensions et par mise en correspondance, par rotation, d'au moins un deuxième repère extérieur prévu sur le porte-analogue avec ledit premier repère extérieur du cylindre de guidage,
- ledit analogue d'implant présentant des dimensions correspondant à celles de l'implant virtuel sélectionné pour l'insertion dans les images en deux et trois dimensions lequel correspond à un implant réel à placer dans la mâchoire du patient, et ledit porte-analogue d'implant étant identique à un porte-implant sélectionné pour l'implantation dudit implant réel à placer,
- une fixation de l'analogue d'implant dans son trou, tel que placé,
- après enlèvement de chaque porte-analogue et du guide chirurgical, une confection d'une prothèse dentaire définitive adaptée au modèle pourvu du ou des analogues d'implant, cette prothèse pouvant ainsi être fixée sur les implants sélectionnés après leur implantation dans la mâchoire d'une manière guidée par le guide chirurgical et identique à celle utilisée pour le placement des analogues d'implant dans le modèle.

2. Procédé suivant la revendication 1, **caractérisé en ce qu'**il comprend en outre
- un façonnage à partir de ladite empreinte d'au moins un modèle, sur lequel on réalise un montage muni de fausses dents adaptables en bouche,
- une réalisation d'une clef du montage,
- après enlèvement desdites fausses dents, un coulage, dans la clef montée sur le modèle, d'une matière visible en imagerie radiologique, et un durcissement de celle-ci sous la forme d'un arc,
- une division de l'arc durci en dents artificielles radiologiques individuelles qui, replacées dans la clef, sont fixées sur le modèle, et
- après enlèvement de la clef, ladite réalisation dudit guide radiologique par dépôt d'une résine autodurcissante sur les dents artificielles radiologiques fixées au modèle.

3. Procédé suivant la revendication 2, **caractérisé en ce que** la matière visible en imagerie radiologique est un mélange de résine courante pour le façonnage de dents artificielles et de sulfate de baryum.

4. Procédé suivant l'une des revendications 1 à 3, **caractérisé en ce que** la confection de la prothèse dentaire comprend un modelage virtuel d'élément de prothèse à partir des images radiologiques, un enregistrement dans l'ordinateur de données correspondant aux images virtuelles de ces éléments, leur transmission à une machine-outil, un fraisage de ces éléments par cette machine-outil conformément à ces données dans une matière appropriée et une fixation de ces éléments de prothèse préalablement fraisés aux analogues d'implant du modèle.

5. Procédé suivant l'une des revendications 1 à 4, **caractérisé en ce que** l'image radiologique traitée susdite est obtenue par balayage.

6. Appareillage destiné à une implantation de prothèse dentaire dans une mâchoire d'un patient, comprenant
- au moins un modèle (1) réalisé à partir d'une empreinte de la mâchoire du patient,
- un guide radiologique (7), également réalisé à partir de cette empreinte, et doté d'au moins une dent artificielle radiologique (6) et de repères radiologiques (28),
- un ordinateur,
- un programme de traitement d'image permettant de piloter l'ordinateur de façon à constituer, à partir d'une image radiologique en deux dimensions du guide radiologique susdit en position sur la mâchoire du patient, une image en trois dimensions et à insérer dans ces images en deux et trois dimensions, par dent, un implant virtuel en position chirurgicalement appropriée dans l'image de la mâchoire et un cylindre de guidage virtuel sélectionné orienté coaxialement à l'implant virtuel dans l'image du guide radiologique,
- un outil de positionnement et de forage, dans lequel le guide radiologique (7) est positionné à l'aide de ses repères radiologiques (28), cet outil étant capable, sur base des données récoltées et calculées par l'ordinateur relativement aux images en deux et trois dimensions, de forer dans chacune des dents du guide radiologique un premier trou (8) pour recevoir un cylindre de guidage (9) disposé et orienté comme le cylindre de guidage virtuel sur les images en deux et trois dimensions,
- un cylindre de guidage (9) à loger dans chacun des premiers trous forés (8) du guide radiologique (7) qui devient ainsi un guide chirurgical (11), chaque cylindre de guidage étant muni d'au moins un premier repère extérieur (10),
- au moins un premier foret (13), qui, lorsque le guide chirurgical (11) est en position sur le modèle (1), est guidable au travers de chaque cylindre de guidage (9) et est capable de forer là, dans le modèle, un deuxième trou (16) suivant l'orientation du cylindre de guidage correspondant,
- un analogue d'implant (17) correspondant à chaque implant virtuel sélectionné à loger dans chaque deuxième trou (16) foré du modèle (1), à l'aide d'un porte-analogue (18) à coulisser axialement au travers du cylindre de guidage (9) correspondant, chaque porte-analogue comportant des moyens d'arrêt (20), qui arrêtent le coulissement du porte-analogue (18) par rapport au cylindre de guidage (9) lorsque l'analogue (17) est dans une position correspondant à la position chirurgicalement appropriée des images en deux et trois dimensions, et au moins un deuxième repère extérieur (23) à mettre en correspondance, par rotation, avec ledit au moins un premier repère extérieur (10) du cylindre de guidage (9),
- une prothèse dentaire (25, 26) adaptable sur le modèle (1) muni du ou des analogues d'implant (17) susdits,
- au moins un deuxième foret qui, lorsque le guide chirurgical (11) est en position sur la mâchoire du patient, est guidable au travers de chaque cylindre de guidage (9) et est capable de forer là des troisièmes trous dans la mâchoire suivant l'orientation du cylindre de guidage, ledit au moins un deuxième foret comportant des moyens d'arrêt qui, contre le cylindre de guidage, arrêtent une pénétration du foret à une profondeur qui correspond à celle de ladite position chirurgicalement appropriée de l'implant virtuel sur les images en deux et trois dimensions, et
- un implant correspondant à chaque implant virtuel à loger dans chaque troisième trou de la mâchoire à l'aide d'un porte-implant à coulisser axialement au travers du cylindre de guidage correspondant, chaque implant et son porte-implant ayant des dimensions et formes identiques à l'analogue d'implant (17) et à son porte-analogue (18) utilisés dans le modèle (1), chaque porte-implant comportant ainsi des moyens d'arrêt, qui arrêtent le coulissement du porte-implant dans le cylindre de guidage (9) lorsque l'implant est dans la position chirurgicalement appropriée susdite, et au moins un troisième repère extérieur à mettre en correspondance, par rotation, avec ledit au moins un premier repère extérieur (10) du cylindre de guidage (9), les implants ainsi fixés dans la mâchoire étant en position pour recevoir la prothèse dentaire (25, 26) préalablement réalisée sur le modèle (1).

7. Appareillage chirurgical suivant la revendication 6, **caractérisé en ce que** chaque cylindre de guidage (9), d'une part, et chaque porte-analogue (17) ou chaque porte-implant à coulisser à l'intérieur de ce cylindre de guidage, d'autre part, présentent des moyens de butée réciproques (10, 23) qui arrêtent un mouvement de rotation du porte-analogue ou porte-implant par rapport au cylindre de guidage dans une position prédéterminée, ces moyens de butée servant de premier et deuxième ou respectivement troisième repères extérieurs susdits.

8. Appareillage chirurgical suivant l'une des revendications 6 et 7, **caractérisé en ce que** chaque cylindre de guidage (9) présente une cavité axiale ayant un diamètre interne, chaque porte-analogue (17) ou porte-implant ou chaque deuxième foret comportant une partie cylindrique présentant un diamètre externe permettant un coulissement guidé de cette partie dans la cavité du cylindre de guidage (9) et une bride (20) présentant un diamètre supérieur audit diamètre interne, qui sert de moyen d'arrêt susdit.

## Claims

1. Method of manufacturing a dental prosthesis to be implanted in the jaw of a patient, involving
- creating, from a mould of the patient's jaw, a radiological guide, provided with at least one radiological artificial tooth and with radiological reference marks,
- computer processing a two-dimensional radiological image representing the aforementioned radiological guide in position on the jaw, in order, from this two-dimensional image, to construct a three-dimensional image,
- inserting, per tooth, into the two-dimensional and three-dimensional images, a virtual implant in a surgically appropriate position into the image of the jaw and a virtual guide cylinder directed co-axial to the virtual implant in the image of the radiological guide,
- from the data gathered and calculated by the computer during the said steps of image processing and of inserting the virtual implant and virtual guide cylinder, creating a surgical guide through a first drilling operation which, into each artificial tooth supported by the radiological guide, drills a first hole suited to receiving a guide cylinder arranged and oriented as per the corresponding virtual guide cylinder from the two-dimensional and three-dimensional images, and through positioning in each first drilled hole a guide cylinder such as this which is equipped with at least one external reference mark,
- positioning the surgical guide on a model obtained from the said mould,
- performing a second drilling operation, guided through each guide cylinder, to drill a second hole through this model,
- positioning an implant analogue in each second hole by sliding through the guide cylinder an analogue holder, which holds the aforementioned implant analogue, down to a depth that corresponds to the depth of the virtual implant in the two-dimensional and three-dimensional images and, by rotating, bringing at least one second external reference mark provided on the analogue holder into register with the said first external reference mark of the guide cylinder,
- the said implant analogue having dimensions corresponding to those of the virtual implant selected for insertion in the two-dimensional and three dimensional images and which corresponds to an actual implant that is to be fitted into the jaw of the patient, and the said implant analogue holder being identical to an implant holder selected for implanting the said actual implant that is to be fitted,
- fixing the implant analogue into its hole, as positioned,
- having removed each analogue holder and the surgical guide, creating a permanent dental prosthesis tailored to the model provided with the implant analogue or analogues, it thus being possible for this prosthesis to be fixed to the selected implants once they have been planted in the jaw in a way that is guided by the surgical guide and identical to the method used for positioning the implant analogues in the model.

2. Method according to Claim 1, **characterized in that** it further involves
- from the said mould, fashioning at least one model, on which a wax-up fitted with false teeth that can be tried out in the mouth is created,
- creating a key from the wax-up,
- having removed the said false teeth, pouring, into the key mounted on the model, a material that shows up under x-ray, and curing this in the form of a bow,
- splitting the cured bow into individual radiological artificial teeth which, returned to the key, are fixed to the model, and
- after removing the key, creating the said radiological guide by depositing a self-hardening resin on the radiological artificial teeth fixed to the model.

3. Method according to Claim 2, **characterized in that** the material that shows under x-ray is a mixture of the common resin used for making artificial teeth with barium sulphate.

4. Method according to one of Claims 1 to 3, **characterized in that** the construction of the dental prosthesis involves virtual modelling of the prosthesis element from radiological images, capturing in the computer data corresponding to the virtual images of these elements, transmitting this data to a machine tool, having this machine tool machine these elements in accordance with this data from an appropriate material and fixing these ready-machined prosthetic elements to the implant analogues of the model.

5. Method according to one of Claims 1 to 4, **characterized in that** the aforementioned processed radiological image is obtained by scanning.

6. Device intended for implanting a dental prosthesis in the jaw of a patient, involving
- at least one model (1) created from a mould of the jaw of the patient,
- a radiological guide (7) also created from this mould, and provided with at least one radiological artificial tooth (6) and with radiological reference marks (28),
- a computer,
- an image processing program used to control the computer in such a way as to construct, from a two-dimensional radiological image of the aforementioned radiological guide in position on the jaw of the patient, a three-dimensional image and as to insert into these two-dimensional and three-dimensional images, per tooth, a virtual implant in the surgically appropriate position into the image of the jaw, and a selected virtual guide cylinder oriented co-axial to the virtual implant into the image of the radiological guide,
- a positioning and drilling tool, in which the radiological guide (7) is positioned using its radiological reference marks (28), this tool being capable on the basis of the data gathered and calculated by the computer in relation to the two-dimensional and three-dimensional images, of drilling, into each of the teeth of the radiological guide, a first hole (8) to accept a guide cylinder (9) positioned and oriented just as the virtual guide cylinder in the two-dimensional and three-dimensional images,
- a guide cylinder (9) to be housed in each of the first holes (8) drilled in the radiological guide (7), which thus becomes a surgical guide (11), each guide cylinder being equipped with at least one first external reference mark (10),
- at least one first drill bit (13) which, when the surgical guide (11) is in position on the model (1), can be guided through each guide cylinder (9) and is capable, in the model, of drilling a second hole (16) with the orientation of the corresponding guide cylinder,
- an implant analogue (17) corresponding to each selected virtual implant that is to be housed in each second hole (16) drilled in the model (1), using an analogue holder (18) that is to be slid axially through the corresponding guide cylinder (9), each analogue holder comprising stop means (20) which stop the sliding of the analogue holder (18) relative to the guide cylinder (9) when the analogue (17) is in a position corresponding to the surgically appropriate position of the two-dimensional and three dimensional images, and at least one second external reference mark (23) to be brought into register, by rotating, with the said at least one first external reference mark (10) belonging to the guide cylinder (9),
- a dental prosthesis (25, 26) that can be fitted to the model (1) equipped with the aforementioned implant analogue or analogues (17),
- at least one second drill bit which, when the surgical guide (11) is in position on the jaw of the patient, can be guided through each guide cylinder (9) and is capable of drilling third holes into the jaw with the orientation of the guide cylinder, the said at least one second drill bit comprising stop means which, against the guide cylinder, stop the penetration of the drill bit at a depth that corresponds to that of the said surgically appropriate position of the virtual implant in the two-dimensional and three-dimensional images, and
- an implant corresponding to each virtual implant that is to be housed in each third hole in the jaw using an implant holder that is to be slid axially through the corresponding guide cylinder, each implant and its implant holder having dimensions and shapes identical to the implant analogue (17) and to its analogue holder (18) which were used in the model (1), each implant holder thus comprising stop means, which stop the implant holder from sliding in the guide cylinder (9) when the implant is in the aforementioned surgically appropriate position, and at least one third external reference mark to be brought into register, by rotating, with the said at least one first external reference mark (10) belonging to the guide cylinder (9), the implants thus fitted into the jaw being in the correct position to receive the dental prosthesis (25, 26) created beforehand on the model (1).

7. Surgical device according to Claim 6, **characterized in that** each guide cylinder (9) on the one hand, and each analogue holder (18) or each implant holder to be slid inside this guide cylinder, on the other hand, have reciprocal stop means (10, 23) which halt a rotational movement of the analogue holder or of the implant holder with respect to the guide cylinder in a predetermined position, these stop means acting as the aforementioned first and second or, respectively third, external reference marks.

8. Surgical device according to one of Claims 6 and 7, **characterized in that** each guide cylinder (9) has an axial cavity with an internal diameter, each analogue holder (18) or implant holder or each second drill bit having a cylindrical part with an outside diameter that allows this part to have guided sliding in the cavity of the guide cylinder (9) and a flange (20) that has a diameter greater than the said inside diameter, and which acts as the aforementioned stop means.

## Patentansprüche

1. Verfahren zur Herstellung einer Zahnprothese zur Implantation in einen Kiefer eines Patienten, das Folgendes umfasst:
- auf Grundlage eines Abdrucks des Kiefers des Patienten, Herstellen einer Röntgenführung, die mit mindestens einem Röntgenkunstzahn und Röntgenmarkierungszeichen versehen ist,
- Rechnerverarbeitung eines zweidimensionalen Röntgenbildes, das die Röntgenführung in Position auf dem Kiefer darstellt, um auf Grundlage dieses zweidimensionalen Bildes ein dreidimensionales Bild herzustellen,
- in den zwei- und dreidimensionalen Bildern, Einführen eines virtuellen Implantats pro Zahn in der chirurgisch geeigneten Position in das Bild des Kiefers und eines virtuellen Führungszylinders, der koaxial auf das virtuelle Implantat ausgerichtet ist, in das Bild der Röntgenführung,
- auf Grundlage der durch den Rechner während der Schritte der Bildverarbeitung und Einführung des virtuellen Implantats und virtuellen Führungszylinders gewonnenen und berechneten Daten, Herstellen einer chirurgischen Führung durch eine erste Bohrung, in jedem von der Röntgenführung gestützten Kunstzahn, eines ersten Lochs, das zur Aufnahme eines Führungszylinders geeignet ist, der wie der entsprechende virtuelle Führungszylinder der zwei- und dreidimensionalen Bilder angeordnet und ausgerichtet ist, und durch Anordnen eines solchen Führungszylinders, der mit mindestens einem äußeren Markierungszeichen versehen ist, in jedem ersten gebohrten Loch,
- Anordnen der chirurgischen Führung an einem auf Grundlage des Abdrucks erhaltenen Modell,
- zweites Bohren eines zweiten Lochs durch dieses Modell unter Führung durch jeden Führungszylinder,
- Anordnen eines Implantatanalogs in jedem zweiten Loch durch Schieben eines das Implantatanalog tragenden Analogträgers in den Führungszylinder bis zu einer Tiefe, die der des virtuellen Implantats auf den zwei- und dreidimensionalen Bildern entspricht, und durch Indeckungbringen mindestens eines auf dem Analogträger vorgesehenen zweiten äußeren Markierungszeichens durch Drehung mit dem ersten äußeren Markierungszeichen des Führungszylinders,
- wobei das Implantatanalog Abmessungen aufweist, die denen des für das Einführen in die zwei- und dreidimensionalen Bilder ausgewählten virtuellen Implantats entsprechen, das einem in den Kiefer des Patienten einzusetzenden realen Implantat entspricht, und wobei der Analogimplantatträger mit einem für die Implantation des einzusetzenden realen Implantats gewählten Implantatträger identisch ist,
- Befestigen des Implantatanalogs in sein Loch, wie vorgesehen,
- nach dem Entfernen jedes Analogträgers und der chirurgischen Führung, Herstellen einer endgültigen Zahnprothese, die an das vorgesehene Modell des oder der Implantatanaloge angepasst ist, wobei diese Prothese somit nach der Implantation der gewählten Implantate in den Kiefer unter Führen durch die chirurgische Führung und auf identische Weise wie die zur Anordnung der Implantatanaloge in das Modell verwendete an den gewählten Implantaten befestigt werden kann.

2. Verfahren nach Anspruch 1, **dadurch gekennzeichnet, dass** es des Weiteren Folgendes umfasst:
- auf Grundlage des Abdrucks Formen mindestens eines Modells, an dem ein mit an den Mund anpassbaren falschen Zähnen versehener Aufbau hergestellt wird,
- Herstellen eines Aufbauschlüssels,
- nach dem Entfernen der falschen Zähne Gießen eines in der Röntgenbildgebung sichtbaren Materials in den an dem Modell angebrachten Schlüssel und sein Härten in Form eines Bogens,
- Teilen des gehärteten Bogens in einzelne Röntgenkunstzähne, die nach Austausch in dem Schlüssel an dem Modell befestigt werden, und
- nach dem Entfernen des Schlüssels Herstellen der Röntgenführung durch Ablagern eines selbsthärtenden Harzes auf die an dem Modell befestigten Röntgenkunstzähne.

3. Verfahren nach Anspruch 2, **dadurch gekennzeichnet, dass** das in der Röntgenbildgebung sichtbare Material ein Gemisch aus gebräuchlichem Harz zur Herstellung von Kunstzähnen und Bariumsulfat ist.

4. Verfahren nach einem der Ansprüche 1 bis 3, **dadurch gekennzeichnet, dass** die Herstellung der Zahnprothese eine virtuelle Modellierung des Prothesenelements auf Grundlage von Röntgenbildern, Aufzeichnen von den virtuellen Bildern dieser Elemente entsprechenden Daten in den Rechner, ihre Übertragung auf eine Werkzeugmaschine, Fräsen dieser Elemente durch diese Werkzeugmaschine gemäß dieser Daten auf geeignete Weise und Befestigen dieser zuvor gefrästen Prothesenelemente an die Implantatanaloge des Modells umfasst.

5. Verfahren nach einem der Ansprüche 1 bis 4, **dadurch gekennzeichnet, dass** das verarbeitete Röntgenbild durch Abtasten erhalten wird.

6. Für eine Zahnprothesenimplantation in einen Kiefer eines Patienten bestimmte Einrichtung, die Folgendes umfasst:
- mindestens ein auf Grundlage eines Abdrucks des Kiefers des Patienten hergestelltes Modell (1),
- eine Röntgenführung (7), die ebenfalls auf Grundlage dieses Abdrucks hergestellt ist und mit mindestens einem Röntgenkunstzahn (6) und Röntgenmarkierungszeichen (28) versehen ist,
- einen Rechner,
- ein Bildverarbeitungsprogramm, das gestattet, den Rechner so zu steuern, dass er auf Grundlage eines zweidimensionalen Röntgenbilds der Röntgenführung in Position auf dem Kiefer des Patienten ein dreidimensionales Bild bildet und in diese zwei- und dreidimensionalen Bilder ein virtuelles Implantat pro Zahn in chirurgisch geeigneter Position in dem Bild des Kiefers und einen virtuell gewählten Führungszylinder, der koaxial auf das virtuelle Implantat ausgerichtet ist, in dem Bild der Röntgenführung, einsetzt,
- ein Positionier- und Bohrwerkzeug, in dem die Röntgenführung (7) mit Hilfe ihrer Röntgenmarkierungszeichen (28) positioniert wird, wobei dieses Werkzeug auf Grundlage der durch den Rechner bezüglich der zwei- und dreidimensionalen Bilder gewonnenen und berechneten Daten in jeden der Zähne der Röntgenführung ein erstes Loch (8) bohren kann, um einen Führungszylinder (9) aufzunehmen, der wie der virtuelle Führungszylinder auf den zwei- und dreidimensionalen Bildern angeordnet und ausgerichtet ist,
- einen Führungszylinder (9) zur Aufnahme in jedem der ersten gebohrten Löcher (8) der Röntgenführung (7), der somit zu einer chirurgischen Führung (11) wird, wobei jeder Führungszylinder mit mindestens einem ersten äußeren Markierungszeichen (10) versehen ist,
- mindestens einen ersten Bohrer (13), der, wenn die chirurgische Führung (11) auf dem Modell (1) positioniert ist, durch jeden Führungszylinder (9) geführt werden kann und dort in dem Modell ein zweites Loch (16) gemäß der Ausrichtung des entsprechenden Führungszylinders bohren kann,
- ein Implantatanalog (17), das jedem virtuellen gewählten Implantat entspricht, zur Aufnahme in jedem gebohrten zweiten Loch (16) des Modells (1) mit Hilfe eines Analogträgers (18) zur axialen Verschiebung durch den entsprechenden Führungszylinder (9), wobei jeder Analogträger Blockiermittel (20), die das Verschieben des Analogträgers (18) bezüglich des Führungszylinders (9) blockieren, wenn sich das Analog (17) in einer Position befindet, die der chirurgisch geeigneten Position der zwei- und dreidimensionalen Bilder entspricht, und mindestens ein zweites äußeres Markierungszeichen (23) zum Indeckungbringen mit dem mindestens einen ersten äußeren Markierungszeichen (10) des Führungszylinders (9) durch Drehung aufweist,
- eine Zahnprothese (25, 26), die an das mit dem oder den Implantatanalogen (17) versehene Modell (1) angepasst werden kann,
- mindestens einen zweiten Bohrer, der, wenn die chirurgische Führung (11) auf dem Kiefer des Patienten positioniert ist, durch jeden Führungszylinder (9) geführt werden und dort dritte Löcher in den Kiefer gemäß der Ausrichtung des Führungszylinders bohren kann, wobei der mindestens eine zweite Bohrer Blockiermittel aufweist, die ein Eindringen des Bohrers gegen den Führungszylinder auf einer Tiefe blockieren, die der der geeigneten chirurgischen Position des virtuellen Implantats auf den zwei- und dreidimensionalen Bildern entspricht, und
- ein Implantat, das jedem virtuellen Implantat entspricht, zur Aufnahme in jedem dritten Loch des Kiefers mit Hilfe eines Implantatträgers zum axialen Verschieben durch den entsprechenden Führungszylinder, wobei jedes Implantat und sein Implantatträger Abmessungen und Formen aufweisen, die mit dem Implantatanalog (17) und seinem Analogträger (18), die in dem Modell (1) verwendet werden, identisch sind, wobei jeder Analogträger somit Blockiermittel, die das Verschieben des Implantatträgers in den Führungszylinder (9) blockieren, wenn sich das Implantat in der chirurgisch geeigneten Position befindet, und mindestens ein drittes äußeres Markierungszeichen, das durch Drehung in Deckung mit dem mindestens einen ersten äußeren Markierungszeichen (10) des Führungszylinders (9) gebracht werden soll, aufweist, wobei sich die somit in dem Kiefer befestigten Implantate in einer Position zur Aufnahme der zuvor an dem Modell (1) realisierten Zahnprothese (25, 26) befinden.

7. Chirurgische Einrichtung nach Anspruch 6, **dadurch gekennzeichnet, dass** einerseits jeder Führungszylinder (9) und andererseits jeder Analogträger (18) oder jeder Implantatträger, der im Inneren des Führungszylinders gleiten soll, gegenseitige Anschlagmittel (10, 23) aufweist, die eine Drehbewegung des Analogträgers oder Implantatträgers bezüglich des Führungszylinders in einer vorbestimmten Position anhalten, wobei diese Anschlagmittel als erstes und zweites bzw. drittes äußeres Markierungszeichen dienen.

8. Chirurgische Einrichtung nach einem der Ansprüche 6 und 7, **dadurch gekennzeichnet, dass** jeder Führungszylinder (9) einen axialen Hohlraum mit einem Innendurchmesser aufweist, wobei jeder Analogträger (18) oder Implantatträger oder jeder zweite Bohrer einen zylindrischen Teil, der einen Außendurchmesser aufweist, welcher ein geführtes Verschieben dieses Teils in dem Hohlraum des Führungszylinders (9) gestattet, und einen Flansch (20) aufweist, der einen größeren Durchmesser als der Innendurchmesser aufweist und als Blockiermittel dient.
